# EUROPEAN PATENT APPLICATION

(11) **EP 4 722 999 A1**
(43) Date of publication of application: **08.04.2026**
(21) Application number: 24204308.1
(22) Date of filing: 02.10.2024
(51) Int. Cl.: G06Q 10/02, G06Q 10/04, G06Q 10/08, G06Q 10/0836, G06Q 10/083

(54) **A UTILISATION PREDICTOR**

(71) Applicant: SwipBox Development ApS, 6400 Sønderborg (DK)
(72) Inventor: Kaczmarek, Allan, 6400 Sønderborg (DK)
(74) Representative: Patrade A/S

(57) **Abstract**

A computer-implemented method (100) for predicting compartment availability of a parcel locker at a time of a carrier delivery, the method (100) comprises steps of
- obtaining (200) compartment occupation status of the parcel locker (10);
- predicting (300) the compartment availability (80) of the parcel locker (10) at the time of carrier delivery by processing the compartment occupation statuses by a trained data driven model (M1), wherein the compartment statuses are fed as a digital input to the trained data driven model (M1) and where the trained data driven model (M1) provides a predicted compartment availability (80) at an estimated time of carrier delivery;
- transmitting (400) the predicted compartment availability (80) to a distribution server (90).

## Description

### Field of the Invention

The present invention relates to a computer-implemented method for predicting compartment availability of a parcel locker at a time of a carrier delivery.

### Background of the Invention

Today, parcel lockers are used extensively as an alternative to home delivery and parcel shops as the parcel lockers can be placed decentralised and be operated by any user. Most outdoor parcel lockers can be operated 24 hours a day.

The capacity of a parcel locker or parcel throughput is limited by various factors. One factor is parcel dwell time, which is the time from delivery of a parcel by a carrier until a user picks up the parcel. The parcel dwell time is ideally as short as possible, as it will accelerate refilling of the parcel locker. Many parcel lockers are only refilled once per day and for these parcel lockers, a parcel dwell time below 24 hours is ideal, as it in theory enables full refill of the parcel locker every day, as the courier or carrier will arrive at an empty locker which can then be fully refilled.

However, parcels are not assigned to a parcel locker when the courier or carrier arrives at the parcel locker. The parcels are assigned to a parcel locker earlier by the carrier requesting a compartment of a locker from the distribution server of the parcel locker provider. The request is typically sent while the parcel is within a distribution centre of the carrier and the request must be answered in less than 15 seconds, such as within seconds or less than a second as the parcel will otherwise be assigned to a parcel shop or home delivery or another PUDO (Pick-Up Drop-Off) service provider. This request may be sent at any time during the day and currently a parcel is only assigned to a compartment if the compartment is empty and not already booked.

Thus, if a courier or carrier refills a parcel locker at 10:00 AM and a request for a compartment of said locker is sent at 10:05 AM, then the parcel will be rejected for a compartment even though it is very likely that at least one of the compartments will be free at the time of arrival of the next courier or carrier. Thereby, the number of parcels sent to the parcel locker may be lower than the actual number of free compartments, when the courier or the carrier arrives.

Furthermore, the distribution server of the parcel locker may not even have up to date data on the actual parcel locker, if the parcel locker does not have a long-range communication module or is programmed to seldom use a long-range communication module for the distribution server of the parcel locker provider. The parcel locker may be of a similar type of parcel locker as the Infinity automated parcel machine sold by the company Swipbox, which uses tokens sent through third-party devices to communicate with the distribution server of the parcel locker provider. This is described in greater detail in EP3756152 and/or EP3755187.

In short, there is a need for an improvement of the booking procedure to increase the utilisation of the parcel locker such that the total parcel throughput can be increased at each parcel locker. Thereby, the same size parcel locker fleet can in effect distribute a larger number of parcels.

### Object of the Invention

It is an object of the present disclosure to provide a computer-implemented method for predicting compartment availability of a parcel locker at a time of a carrier delivery.

It is an object of the present disclosure method of reserving, at a distribution server, a compartment of a parcel locker to a carrier service.

### Description of the Invention

An object is achieved by a computer-implemented method for predicting compartment availability of a parcel locker at a time of a carrier delivery. The method comprises steps of
- obtaining compartment occupation status of the parcel locker;
- predicting the compartment availability of the parcel locker at the time of carrier delivery by processing the compartment occupation statuses by a trained data driven model, wherein the compartment statuses are fed as a digital input to the trained data driven model and where the trained data driven model provides a predicted compartment availability at an estimated time of carrier delivery;
- transmitting the predicted compartment availability to a distribution server.

The resulting predicted compartment availability may be simple 0/1-value such as "accept booking"/"reject booking" and/or a value such as estimated time of next free compartment and/or estimated time of next carrier delivery. More information provided by the data-driven model will enable the distribution server to decide whether to book or not. Furthermore, the distribution server may transmit a booking confirmation including the data of the predicted compartment availability or a subset of the data of the predicted compartment availability.

The trained data driven model does not know the exact time of carrier delivery or courier delivery thus the predicted compartment availability will be based on an estimated time of carrier delivery which may be an output from the trained data driven model or may be based on the data which has been used for training the data driven model.

The predicted compartment availability may be predicted by number of free compartments at the time of carrier delivery at the specific parcel locker.

A computer-implemented method has been operating on a number of parcel lockers in a shadow-mode without the knowledge of a carrier and without performing bookings based on the predicted compartment availability. The increase of utilization differs from parcel locker to parcel locker depending at least on the parcel collection pattern at the individual parcel lockers and number of compartments. However, the shadow-mode has shown that the parcel throughput can be increased by 1-5 parcel per day per parcel locker with 50 compartments. If a carrier delivers parcels every weekday, then this translates to 260 to 1300 extra parcels per annum per parcel locker with 50 compartments. Thus, the change from reacting to compartment availability in real time to predicting and managing capacity proactively will increase the parcel throughput.

In this application, a parcel locker may include two or more automated parcel machines at a service point, where the parcel lockers are typically positioned in series next to each other. The total number compartments of the parcel locker are the sum of compartments of the automated parcel machines.

The trained data driven model for predictive management of parcel locker compartments. The trained data driven model utilizes behavioural learning algorithms to analyse historical data and predict future locker usage patterns. By forecasting demand and optimizing compartment bookings in advance, the system ensures that compartments are available when needed before the courier visit, reducing shipment rejections and improving overall efficiency in the parcel locker industry.

The trained data driven model is trained on historical data of the parcel locker fleet including carrier delivery time slot at parcel locker, pick-up time slot of parcels at parcel lockers. The training involves validation and test data split in accordance with best practice of data driven models. The training data may include additional input points depending on the complexity of the trained data driven model. The training may be performed in shadow mode based on real time booking request, wherein the model can be validated "in-situ" before being used.

The compartment occupation status includes number of compartments and may be divided into groups of compartments depending on size and shape. The occupation status further includes number of compartments occupied by a parcel and number of compartments occupied by a booking for future delivery and number of empty compartments.

The trained data driven model can be trained as will be described on a single parcel locker or the entire fleet of parcel lockers or part of the fleet in an area or in a country or a region of a country. In some cases, the training material is for a large number of parcel lockers, then it can improve the prediction of the data-driven model to include historical time series data of the parcel locker as a digital input to the data-driven model. The historical time series data of the parcel locker may include time series of carrier deliveries and/or time series of recipient collections of a parcel from said parcel locker. In that case, the historical time series data of the parcel locker is fed as a digital input to the trained data driven model. Thereby, the computer-implemented method will be as described below.

In an embodiment of the computer-implemented method for predicting compartment availability of a parcel locker at a time of a carrier delivery. The method may comprise steps of
- obtaining historical time series data of the parcel locker including time series of carrier deliveries and time series of recipient collections and compartment occupation status of the parcel locker;
- predicting the compartment availability of the parcel locker at the time of carrier delivery by processing the historical time series data and the compartment occupation statuses by a trained data driven model, wherein the historical time series data and the compartment statuses are fed as a digital input to the trained data driven model and where the trained data driven model provides a predicted compartment availability at an estimated time of carrier delivery;
- transmitting the predicted compartment availability to a distribution server.

In an aspect, the method may further comprise a step of obtaining position of the parcel locker, wherein the position is fed as a digital input to the trained data driven model. This will further improve the accuracy of the data driven model.

The position may include the latitude and the longitude of the parcel locker as this enables the data driven model to take account for variations in day length or other factors as the latitude and the longitude with enough data from several parcel lockers can help identify a parcel pick-up frequency in said area.

The position may include list of nearby shops or commute hubs such as a metro station or bus stop or train station or similar. The position may include a distance to said shops or commute hubs.

If position is fed as an input, then the first data driven model will also be trained on the position of the parcel locker in a data format in accordance with any or all or a combination of the embodiments of the position mentioned above.

In an aspect, wherein the method may further comprise a step of obtaining one or more of the following parcel locker data of a specific parcel locker
- Mean remaining time;
- Maximum remaining time;
- Minimum remaining time;
- Day wise average user pickups of parcels;
- Week wise average user pickups of parcels;
- Month wise average user pickups of parcels;
- With dwell time of parcels stored within the compartments;
- User ids of recipients of parcels stored at the parcel locker;
wherein the unique parcel locker data is fed as a digital input to the trained data driven model.

The mean remaining time is the meantime for a user pickup of a parcel for all compartments of the specific locker.

The maximum remaining time is the maximum time for a user pickup of a parcel of the specific parcel locker according to the historical data.

The minimum remaining time is the minimum time for a user pickup of a parcel of the specific parcel locker according to the historical data.

The day wise average user pickups of parcels are the average number of parcels picked up daily at said specific parcel locker.

Week wise average user pickups of parcels is the average number of parcels picked up weekly at said specific parcel locker.

Month wise average user pickups of parcels is the average number of parcels picked up monthly at said specific parcel locker.

The numbers for day wise, week wise and month wise may be corrected if a carrier only delivers parcels for six, five, four or another number of days per week as this will reduce day wise average user pickups compared to a parcel locker with delivery every day.

Every parcel locker will have a unique ID and data will be linked to said unique ID also called parcel locker ID. In the case, wherein the parcel locker is comprised of two or more automated parcel machines, then the unique IDs of the two or more automated parcel machines are linked to the parcel locker ID.

Dwell time is the actual dwell time of each parcel stored within the compartments of the parcel locker. Thereby, the data driven model can thereby find patterns in the dwell time distribution of the parcel lockers over time. There is a general trend that the change of a user pick up is reduced with increasing dwell time, however there are large variance across a parcel locker fleet. Furthermore, there is an increase in user pick up just before the parcel is to be returned to sender.

The user IDs of the recipients or users can be used to recognise a collection pattern of said recipients or users across a number of parcel lockers or said specific parcel locker. Thus, historical data of the user IDs may be fed as digital input to the trained data driven model, which further increase the accuracy of the data driven model. The historical data may be binned into various different formats and precision such as binned into days of the week, days of month and/or binned into overall hour of collection. If a parcel is collected by a user at 09:15, then the data is binned as 09 and so on.

In general, the data driven model accuracy improves when adding data about the one or more of the above-mentioned parcel locker data.

In an aspect, the step of predicting and transmitting are performed upon receiving a status update of a parcel locker for providing the distribution server with predicted compartment availability before a booking request.

The status update may be sent by the parcel locker directly via GSM communication or similar long range communication protocols or through a third-party device such as smart device such as a smart phone, tablet or a similar device. The status update may be sent as the status of the parcel locker changes or the status update of the parcel locker may be sent later.

A status update of the parcel locker may be that a parcel has been collected from a compartment, which means that the next carrier may deliver an extra parcel to the parcel locker.

A status update of the parcel locker may be that one, two or more parcels have been delivered to the parcel locker by a carrier or courier.

When a parcel is collected from the parcel locker, then the parcel locker may no longer be fully booked and thus there is no need to cause the data driven model to predict whether a compartment will be free when the carrier arrives. However, the parcel locker may have two or more groups of compartments. The two or more groups may have different sizes and/or shapes hence each group is designed to accommodate a specific sized and shaped parcel. In this case, the data driven model may perform the step of predicting the group or groups of compartments which are fully booked.

When a parcel is collected from the parcel locker, then the parcel locker may still be fully booked due to a queue of one or more parcels being booked at an earlier time based on predictions from the data driven model. In this case, the compartments are still fully booked, hence the step of predicting and transmitting may be performed to provide a new prediction.

In an aspect, the step of predicting and transmitting may be performed with a pre-set repetition rate for providing the distribution server with predicted compartment availability before a booking request.

The time for replying to the booking request from the carrier has to be as short as possible in order for the carrier not to see this as a timeout and finding another delivery option. Many carriers expect a reply within a second. Hence, performing the step of predicting and transmitting enables the distribution server to quickly reply. The repetition rate can be once every 15 minutes or 30 minutes or hour or another appropriate repetition rate. Thereby, the predicted compartment availability is in discrete steps updated to accommodate that the remaining time until carrier delivery is shorter and shorter.

The pre-set repetition rate may be a fluid repetition rate as the changes per time to predicted compartment availability is time dependent, as an example, the number of parcels being collected from midnight to 5 AM is generally very low, while the number of parcels being collected between 4 PM to 7 PM is generally high. Again, there is a great variance across the entire field.

In an aspect, the step of predicting and transmitting may be performed upon receiving a status update from a parcel locker for providing the distribution server with predicted compartment availability before a booking request.

Thereby, the distribution server already has a prediction, and the distribution server will be able to transmit a reply to the booking request in a fast and efficient manner.

Thereby, the data driven model will perform a new prediction when there is an update at the parcel locker, which will typically be a parcel being picked up. If there is a queue of parcels to the parcel locker due to earlier bookings using the data driven model, then it may not be required to perform an update as there are only a minor change to the distribution.

The step of predicting and transmitting may be performed both upon receiving a status update and in accordance with a pre-set repetition rate.

In an aspect, the predicted compartment availability may include at least two time slots with predicted compartment availability within the two time slots.

The predicted compartment availability will change as a function of the current time as there will be less and less time for a user pick up of a parcel the closer to the carrier delivery. Thus, the predicted compartment availability may include at least two time slots with specifically assigned values. The timeslots may have a length of 15 minutes, 30 minutes, 45 minutes or 60 minutes or another length. Thereby, the time sensitivity can be revealed, and the distribution server does not require repeated updates of the predicted compartment availability.

In an aspect, the parcel locker may comprise a first group of compartments and a second group of compartments, wherein the first group of compartments are smaller than the second group of compartments. The step of predicting the compartment availability of the parcel locker may be performed for the first group of compartments and the second group of compartments and the step of transmitting includes transmitting the predicted compartment availability of the first group of compartments and the second group of compartments to the distribution server.

Parcels have different sizes and shapes, therefor a parcel may not fit into all compartments as the parcel may be too large or have an extent along a dimension (i.e. shape) being too large for a group of compartments. Furthermore, the parcel may be small and therefore it is inefficient to place the parcel in a large compartment if another larger parcel can be placed in the large compartment.

The size and/or shape of the parcel is known by the carrier service as it is a common procedure to register size and/or shape of parcels.

An object is achieved by a method of reserving, at a distribution server, a compartment of a parcel locker to a carrier service. The method comprises steps of
- receiving from a carrier service a booking request of a compartment of a parcel locker;
- receiving a predicted compartment availability of the parcel locker;
- reserving the compartment based on the predicted compartment availability;
- transmitting a booking confirmation to the carrier service.

The distribution server receives a booking request of a compartment of a parcel locker. The request can be for a specific compartment of the parcel locker or any compartment of the parcel locker or any compartment with a specific size and/or specific shape. The time for response to the carrier service is short as the parcel is in transfer at the carrier service and either the parcel is assigned to the parcel locker or another option is chosen such that the parcel is assigned to a parcel shop or home delivery or another equivalent solution for last mile delivery.

The distribution server can by receiving the predicted compartment availability of the parcel locker be able to perform the step of reserving the compartment. If the predicted compartment availability predicts that a compartment is available when the carrier arrives at the parcel locker for delivery, then a compartment is booked for the parcel. If the predicted compartment availability predicts that a compartment is occupied when the carrier arrives at the parcel locker. The step of reserving the compartment based on the predicted compartment availability is not necessary a step of reserving a specific compartment as the compartment can be any of the compartments storing a parcel to be collected by a user.

The distribution server performs the step of transmitting a booking confirmation to the carrier service and thereby the throughput can be increased as there will be fewer booking rejections for parcels wherein a compartment would be available at the time of arrival by the carrier or courier.

The step of receiving of a booking request and the step of receiving a predicted compartment availability may be performed at substantially the same time or in any order. However, the distribution server can transmit a booking confirmation or booking rejection faster if the step of receiving a predicted compartment availability is performed before receiving a booking request.

In an aspect, the predicted compartment availability may be obtained by performing the steps of the computer-implemented method for predicting compartment availability of a parcel locker at a time of a carrier delivery. Thereby, the predicted compartment availability is predicted based on a data driven model, which gives better results for these chaotic and non-linear estimates compared to rule-based predictions.

In an aspect, a computer unit external to the distribution server may perform the steps of the computer-implemented method for predicting compartment availability of a parcel locker at a time of a carrier delivery.

The distribution server may perform the steps of the computer-implemented method, however it is also possible to perform these steps external to the distribution such that computer unit can be optimized for performing the step of predicting. The computer unit may be part of a cloud computing service such as the cloud computing service provided by Amazon under the name of AWS

In an aspect, the step of receiving the predicted compartment availability of the parcel locker may be performed before receiving the booking request from the carrier service. Thereby, the distribution can perform a fast and efficient response to the carrier service.

In an aspect, the method may comprise steps of
- receiving from the parcel locker information about a change of the compartment occupation statuses;
- updating the predicted compartment availability by repeating the steps of the computer-implemented method for predicting compartment availability of a parcel locker at a time of a carrier delivery, wherein the changed compartment occupation statuses are fed as a digital input to the first data driven model. Thereby, the prediction is based on the known status of the parcel locker.

In an aspect, wherein the parcel locker may comprise a first group of compartments and a second group of compartments, wherein the first group of compartments are smaller than the second group of compartments.

The booking request is of a compartment of the first group of compartments; and wherein the step of receiving includes the predicted compartment availability of the first group of compartments and the second group of compartments;
the step of reserving the compartment of the first group of compartments based on the predicted compartment availability.
wherein the booking confirmation includes permission to store a parcel in the second group of compartments in the case of non-availability of the first group of compartments.

This will further increase the throughput of the parcel locker by allowing the use of the second group of compartments in the case that one or more compartments form said second group of compartments is available such that parcels which would normally be deemed to be small to the larger second group of compartments.

An object is achieved by a computer program comprising instructions which, when the program is executed by a computer, cause the computer to carry out the steps of the method of any of claims 1-7 and/or the steps of the method of any of claims 8-13.

An object is achieved by a computer readable storage medium having stored thereon the computer program of claim 14.

Examples of training of the data driven model and algorithms used by the data driven model will be provided below.

The data driven model may utilize random forest regression. Random forest regression is a powerful tool for time series forecasting, especially when the data exhibits non-linear relationships and complex patterns as is the case for parcel pick-up and to a lesser degree carrier delivery to a parcel locker. The random forest robustness to out-liers, ability to handle missing data, and flexibility in feature engineering make them a valuable option in many scenarios where sequential models like long short-term memory (LSTM) model might be overkill or where interpretability and simplicity are desired. Random Forests can capture complex, non-linear relationships between input features and the target variable. This is particularly useful in time series data where relationships may not be straightforward.

The data driven model may utilize long short-term memory (LSTM) model. The LSTM model is favored for time series forecasting due to their ability to handle long-term dependencies, manage sequential data, and robustly deal with missing data and noise. Their specialized memory architecture and gating mechanisms make them powerful tools for capturing complex temporal patterns in time series data.

In some embodiments the data driven model may utilize a combination of random forest regression and LSTM model.

The data driven model may utilize other recurrent neural networks, which are capable of retaining information over long sequences used in time series predictions such as a temporal convolution network.

The data driven model may be trained via unsupervised learning such as principal component and/or cluster analysis, wherein the data-driven model is then trained to discover patterns in the training data.

The data driven model may be trained via supervised learning with labeled data of a parcel locker, parcel lockers in an area or city or fleet of parcels locker within a municipality or a country or region of countries or most parcel lockers or the entire fleet of parcel lockers. Examples of good training data such as carrier delivery times and point of time of user pick-up of a parcel as has been described earlier in the present application along with other good data points. The following data has in tests shown to improve the resulting data driven model. The data may be one or more of the following data of a specific parcel locker:
- Mean remaining time; and/or
- Maximum remaining time; and/or
- Minimum remaining time; and/or
- Day wise average user pickups of parcels; and/or
- Week wise average user pickups of parcels; and/or
- Month wise average user pickups of parcels; and/or
- Dwell time of parcels stored within the compartments; and/or
- User IDs of recipients of parcels stored at the parcel locker;

The precision of the data driven model may be evaluated using a part of the training data as input and comparing the predicted compartment availability with the actual carrier delivery time.

The precision of the data driven model may be evaluated using real-time data by running the trained data driven model in a shadow mode, wherein trained data driven model provides the predicted compartment availability, but the prediction is not used by the parcel distribution server or by the carrier service instead the predicted compartment availability is used as a shadow value to evaluate and improve the data driven model. This is especially useful when one or more parcel lockers are set up in a new area, wherein the parcel distribution server does not have any data, however parcel locker data from other areas can to begin with be used as a substitute and the resulting data driven model may be validated in the shadow mode.

### Description of the Drawing

Various examples are described hereinafter with reference to the figures. Like reference numerals refer to like elements throughout. Like elements will, thus, not be described in detail with respect to the description of each figure. It should also be noted that the figures are only intended to facilitate the description of the examples. They are not intended as an exhaustive description of the claimed invention or as a limitation on the scope of the claimed invention. In addition, an illustrated example does not need to have all the aspects or advantages shown. An aspect or an advantage described in conjunction with a particular example is not necessarily limited to that example and can be practiced in any other examples even if not so illustrated, or if not so explicitly described.

Exemplary embodiments of the invention are described in the figures, whereon:
- Fig. 1: illustrates three embodiments of a parcel locker;
- Fig. 2: illustrates booking procedure in a prior art booking system;
- Fig. 3: illustrates a booking procedure using a data driven model;
- Fig. 4: illustrates another booking procedure using a data driven model; and
- Fig. 5: illustrates a change in compartment occupation status resulting in an updated predicted compartment availability.

### Detailed Description of the Invention

Exemplary examples will now be described more fully hereinafter with reference to the accompanying drawings. In this regard, the present examples may have different forms and should not be construed as being limited to the descriptions set forth herein. Accordingly, the examples are merely described below, by referring to the figures, to explain aspects.

Throughout the specification, when an element is referred to as being "connected" to another element, the element is "directly connected" to the other element, "electrically connected", "fluidic connected" or "communicatively connected" to the other element with one or more intervening elements interposed there between.

The terminology used herein is for the purpose of describing particular examples only and is not intended to be limiting. As used herein, the terms "comprises" "comprising" "includes" and/or "including" when used in this specification specify the presence of stated features, integers, steps, operations, elements, and/or components, but do not preclude the presence or addition of one or more other features, integers, steps, operations, elements, components, and/or groups thereof.

Unless otherwise defined, all terms used herein (including technical and scientific terms) have the same meaning as commonly understood by those skilled in the art to which this invention pertains. It will be further understood that terms, such as those defined in commonly used dictionaries, should be interpreted as having a meaning that is consistent with their meaning in the context of the relevant art and will not be interpreted in an idealized or overly formal sense unless expressly so defined in the present specification.

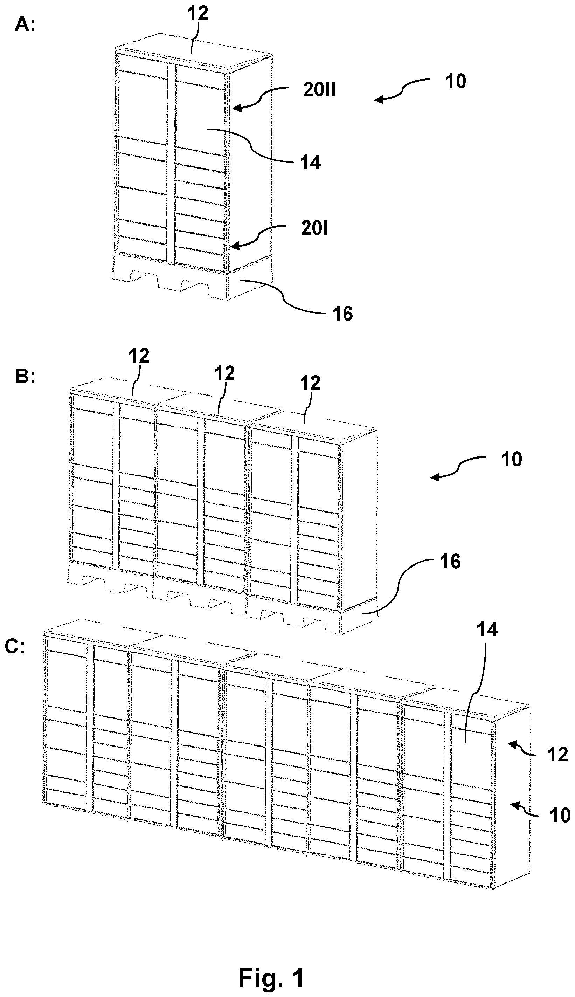

Fig. 1 illustrates three embodiments of a parcel locker 10. Figure 1 illustrates a parcel locker in the form of a single automated parcel machine 12. The shown automated parcel machine 12 comprises a number of compartments 14 having a first group of compartments 20I and a second group of compartments 20II, wherein the compartments of the first group are smaller than the compartments of the second group. The shown automated parcel machine 12 also comprises a (not marked but visibly identifiable) third group of compartments, wherein the third group comprises a size in between the other two groups. In general, there could be any number of group of compartments. The automated parcel machine 12 may include a foundation 16 such as a pre-cast concrete foundation including two apertures for receiving forks of a forklift.

In general, the automated parcel machine 12 may be battery-operated or hard-wired to electric energy. The automated parcel machine 12 may include solar cells.

In general, the automated parcel machine 12 or parcel locker 10 may communicate with a distribution server 90 directly via long range communication such as GSM protocols, 3G, 4G, LTE, 5G or other long range communication protocols. The automated parcel machine 12 or parcel locker 10 may communicate with the distribution server 90 indirectly via a third-party device such as a user's smart phone or a courier's communication device.

In general, the automated parcel machine 12 or parcel locker 10 may comprise a pin pad, and/or screen and/or touchscreen and/or NFC unit and/or short-range communication unit such as Bluetooth or Bluetooth LE or similar for receiving courier or user input which input cause one or more compartments 12 to open. The automated parcel machine 12 may have other means for communicating with the user.

The single automated parcel machine could be a battery-operated locker sold by the company SwipBox.

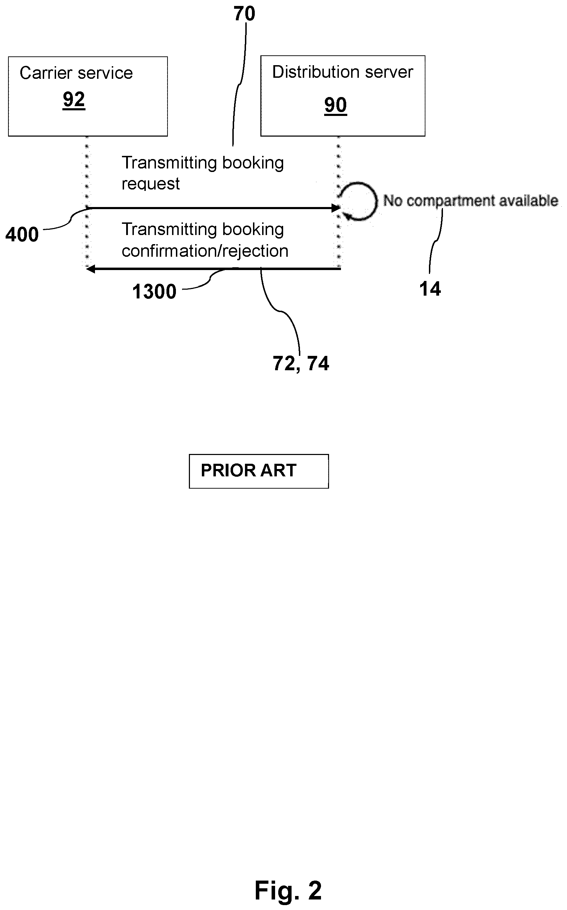

Figure 1B illustrates a parcel locker 10 comprising three automated parcel machines 12. In the shown figure, each automated parcel machine 12 is identical to the single automated parcel machine 12 shown in figure 1A and the automated parcel machines 12 of figure 2B may individually or together have all the features mentioned in the detailed description of figure 1A. However, each automated parcel machine 12 may have different number of compartments 14 and/or different distribution of compartment sizes and/or shapes.

Figure 1C illustrates a parcel locker 10 comprising a single automated parcel machine 12 formed by a number of racks of compartments 14. The shown parcel locker 10 does not have a foundation 16 as the parcel locker 10 may be positioned inside a building or on prepared foundation. The parcel locker 10 is larger than the parcel locker 10 shown in figure 1A however it may have all the same features described in the detailed description of figure 1A.

Fig. 2 illustrates booking procedure in a prior art booking system. The carrier service 92 will transmit 400 a booking request 70 for a compartment 14 of a parcel locker 10 to a distribution server 90. The distribution server 90 performs a check on a distribution database having stored an occupation status of the parcel locker 10.

The compartment occupation status includes number of compartments 14 and may be divided into groups of compartments depending on size and shape. The occupation status further includes number of compartments occupied by a parcel and number of compartments occupied by a booking for future delivery and number of empty compartments.

If the number of empty compartments is greater than zero, then the distribution server 90 will perform a booking and transmit 1300 a booking confirmation 72 to the carrier service.

If the number of empty compartments is zero, then the distribution server 90 will perform a booking and transmit 1300 a booking rejection 74 to the carrier service.

In short, the distribution server 90 performs a booking based on the currently known occupation status of the parcel locker 10. However, this will likely change over the course of a single day. It is not uncommon that the occupation status of a parcel locker is changed within minutes of rejecting a booking, which would mean that if the booking request was transmitted a few minutes later then the booking request would have been met and a booking confirmation 72 would have been sent instead of a booking rejection 74. Thus, this is not an optimal solution.

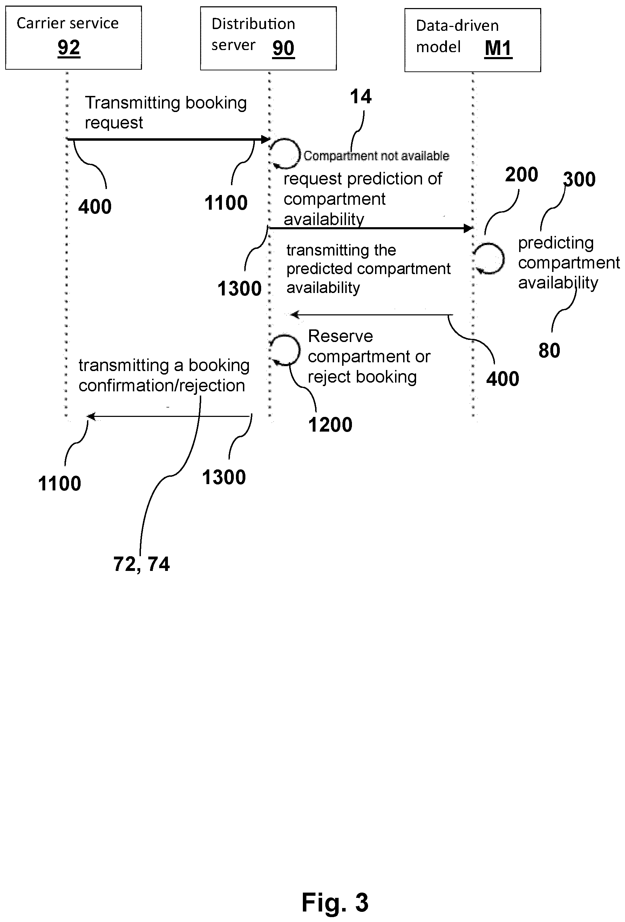

Fig. 3 illustrates a booking procedure using a trained data driven model M1. The first steps of this embodiment are similar to the prior art booking system discussed in figure 2.

The carrier service 92 will transmit 400 a booking request 70 for a compartment 14 of a parcel locker 10 to a distribution server 90. The distribution server 90 perform a check on a distribution database having stored an occupation status of the parcel locker 10.

The compartment occupation status includes number of compartments 14 and may be divided into groups of compartments depending on size and shape. The occupation status further includes number of compartments occupied by a parcel and number of compartments occupied by a booking for future delivery and number of empty compartments.

If the number of empty compartments is greater than zero, then the distribution server 90 will perform a booking and transmit 1300 a booking confirmation 72 to the carrier service.

If the number of empty compartments is zero, then the distribution server 90 will transmit 1300 a request for prediction of compartments availability to a trained data driven model M1. The trained data driven model M1 obtains compartment occupation status of the parcel locker 10, wherein the compartments are either occupied by a parcel or occupied by a booking for future delivery.

The trained data driven model M1 performs a step of predicting 300 the compartment availability 80 of the parcel locker 10 at the time of carrier delivery by the compartment occupation statuses by a trained data driven model M1, wherein the compartment statuses are fed as a digital input to the trained data driven model M1 and where the trained data driven model M1 provides a predicted compartment availability 80 at an estimated time of carrier delivery.

The trained data driven model M1 can be trained as previously described on a single parcel locker 10 or the entire fleet of parcel lockers 10 or part of the fleet in an area or country or region of a country. In some cases, where the training material is for a large number of parcel lockers 10, then it can improve the prediction of the data-driven model to include historical time series data of the parcel locker 10 as a digital input to the data-driven model M1. The historical time series data of the parcel locker 10 may include time series of carrier deliveries and/or time series of recipient collections of a parcel from said parcel locker 10. In that case, the historical time series data of the parcel locker 10 is fed as a digital input to the trained data driven model M1.

The trained data driven model M1 transmits 400 the the predicted compartment availability 80 to the distribution server 90. The distribution server 90 then performs a step of reserving 1200 a compartment or rejecting the booking request based on the predicted compartment availability 80. The distribution server 90 then performs a step of transmitting 1300 a booking confirmation 72 or booking rejection 74 to the carrier service 92.

The carrier service 92 performs a step of receiving 1100 a booking confirmation 72 or booking rejection 74 and the carrier service 92 handles the parcel of the booking request accordingly.

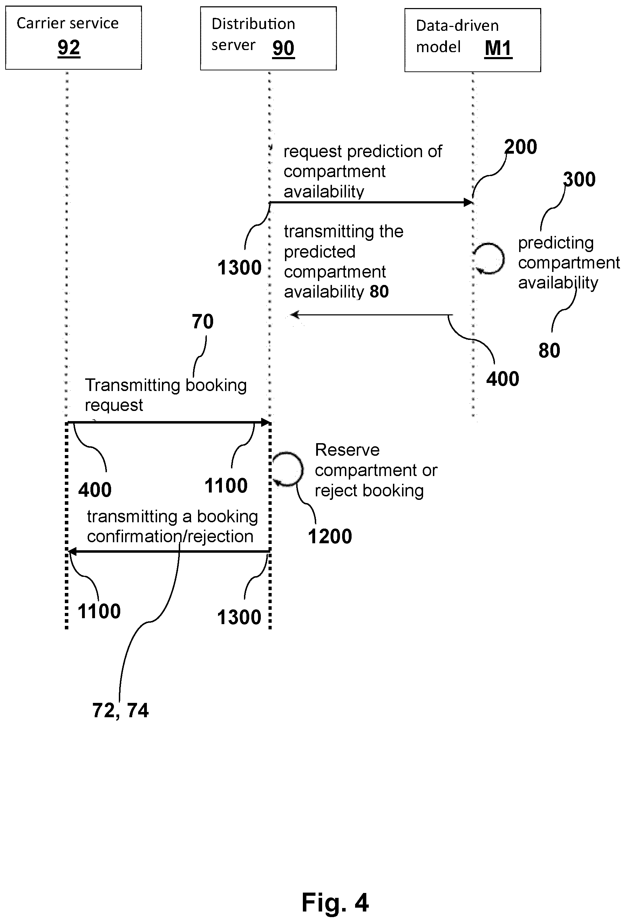

Fig. 4 illustrates another booking procedure using a trained data driven model M1. The communication between the carrier service 92 and distribution server 90 is similar or identical to the communication described in figure 2 and figure 3.

Likewise, the communication between the distribution server 90 and the data-driven model M1 and the step of predicting 300 is similar or identical to the description of figure 3.

However, since the carrier service 92 expects a fast reply from the distribution server 90, then the prediction of compartment availability 80 is performed before receiving 1100 a booking request at the distribution server 90 such that the distribution server 90 can use the predicted compartment availability 80 at once for reserving 1200 a compartment 14 or rejecting the booking request 70, thereby the latency is lowered significantly by having already performed the prediction.

Thereby, the predicted compartment availability is stored on the distribution server.

The predicted compartment availability 80 may include values for future time periods such as for every 5, 10, 15, 25, 30, or 45 minutes the next hour, two hours, three hours or more hours. Thereby, the trained data driven model M1 does not need to perform predictions all the time. Furthermore, this data may enable identification of interesting time slots wherein the chance of a parcel pick-up increases significantly or decreases significantly.

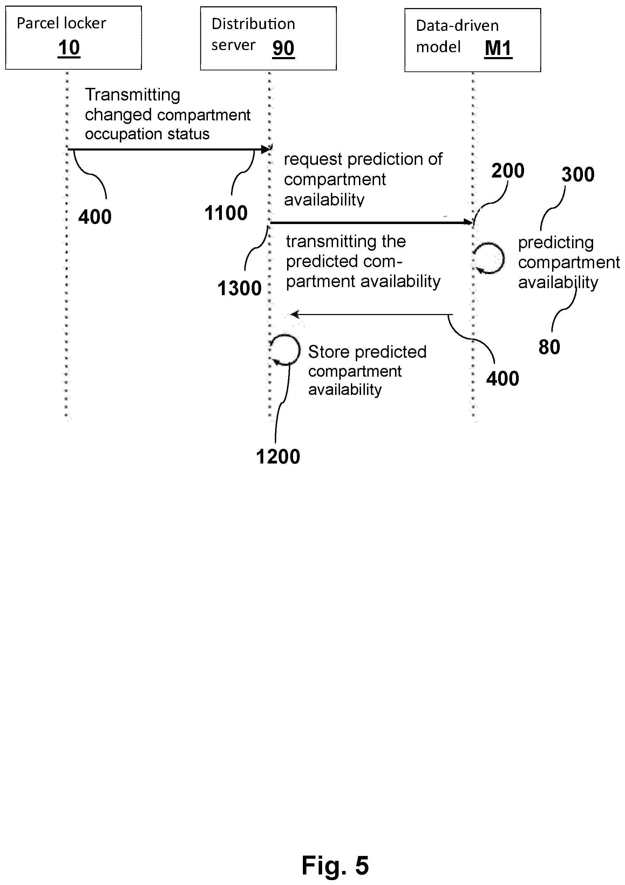

Fig. 5 illustrates a change in compartment occupation 80 resulting in an updated predicted compartment availability.

The parcel locker 10 will when a parcel is picked-up or a number of parcels are delivered to the parcel locker 10 transmit 400 information regarding change of a compartment occupation status of the parcel locker 10 to the distribution server 90. This compartment occupation status may be X number of empty compartments, Y number of occupied compartments or state of compartment Z changed from occupied to empty. Thereby, the distribution server 90 can track available compartments for future booking and/or delivery by a carrier service 92.

The distribution server tracks how many of the empty compartments that are already booked for a future delivery.

The distribution server updates the stored table or stored data with the new information about the changed compartment occupation status. This may change the prediction of compartment availability as the number of remaining occupied compartments, which are occupied by a parcel, may be reduced or increased depending on a user picking up a parcel or a carrier or courier delivering parcels. If a carrier or courier delivers parcels, then the next delivery of parcels will in most cases be the next day i.e. the premise for the prediction is changed drastically resulting in the need for a new prediction.

The distribution server may have a queue of one or more parcels already booked to the parcel locker 10 using the data driven model 10, thus if a compartment is now empty then one parcel from the queue will book said compartment i.e. the parcel locker is still fully booked. In another embodiment, the parcel locker is now fully booked due to delivery of a number of parcels to the parcel locker 10. In both cases, the distribution server 90 transmits 1300 a request for prediction of compartments availability to a trained data driven model M1. If there is an empty and not future booked compartment, then there might be no need to send a request for prediction of compartments availability and if there is sent a request then it would be assumed that all empty compartments are already fully booked.

Thus, the distribution server 90 may transmit 1300 a request for prediction of compartments availability to a trained data driven model M1. The trained data driven model M1 obtains the updated compartment occupation status of the parcel locker 10, wherein the compartments are either occupied by a parcel or occupied by a booking for future delivery.

The trained data driven model M1 performs a step of predicting 300 the compartment availability 80 of the parcel locker 10 at the time of carrier delivery by the compartment occupation statuses by a trained data driven model M1, wherein the compartment statuses are fed as a digital input to the trained data driven model M1 and where the trained data driven model M1 provides a predicted compartment availability 80 at an estimated time of carrier delivery.

The trained data driven model M1 can be trained as previously described on a single parcel locker 10 or the entire fleet of parcel lockers 10 or part of the fleet in an area or country or region of a country. In some cases, where the training material is for a large number of parcel lockers 10 then it can improve the prediction of the data-driven model to include historical time series data of the parcel locker 10 as a digital input to the data-driven model M1. The historical time series data of the parcel locker 10 may include time series of carrier deliveries and/or time series of recipient collections of a parcel from said parcel locker 10. In that case, the historical time series data of the parcel locker 10 is fed as a digital input to the trained data driven model M1.

The predicted compartment availability 80 may include values for future time periods such as for every 5, 10, 15, 25, 30, or 45 minutes the next hour, two hours, three hours or more hours. Thereby, the trained data driven model M1 does not need to perform predictions all the time. Furthermore, this data may enable identification of interesting time slots wherein the chance of a parcel pick-up increases significantly or decreases significantly.

The trained data driven model M1 transmits 400 the predicted compartment availability 80 to the distribution server 90. The distribution server 90 may then perform a step of reserving 1200 a compartment or rejecting the booking request based on the predicted compartment availability 80 as shown and discussed in figure 3-4. The distribution server 90 may then perform a step of transmitting 1300 a booking confirmation 72 or booking rejection 74 to the carrier service 92 as shown in figures 2-4.

| **Item** | **Reference number** |
|---|---|
| Parcel locker | 10 |
| Automated parcel machine | 12 |
| Compartment | 14 |
| Foundation | 16 |
| | |
| | |
| First group of compartments | 20I |
| Second group of compartments | 20II |
| Booking request | 70 |
| Booking confirmation | 72 |
| Booking rejection | 74 |
| | |
| Compartment availability / predicted compartment availability | 80 |
| | |
| Distribution server | 90 |
| Carrier service | 92 |
| Trained data driven model | M1 |
| | |
| Computer-implemented method for predicting compartment availability of a parcel locker at a time of a carrier delivery | 100 |
| Obtaining | 200 |
| Predicting | 300 |
| Transmitting | 400,1300 |
| | |
| | |
| A method of reserving, at a distribution server, a compartment of a parcel locker to a carrier service | 1000 |
| Receiving | 1100 |
| Reserving | 1200 |
| Updating | 1400 |

## Claims

1. A computer-implemented method (100) for predicting compartment availability of a parcel locker at a time of a carrier delivery, the method (100) comprises steps of
- obtaining (200) compartment occupation status of the parcel locker (10);
- predicting (300) the compartment availability (80) of the parcel locker (10) at the time of carrier delivery by processing the compartment occupation statuses by a trained data driven model (M1), wherein the compartment statuses are fed as a digital input to the trained data driven model (M1) and where the trained data driven model (M1) provides a predicted compartment availability (80) at an estimated time of carrier delivery;
- transmitting (400) the predicted compartment availability (80) to a distribution server (90).

2. A computer-implemented method (100) according to claim 1, wherein the method (100) further comprises steps of
obtaining (200) position of the parcel locker (10), wherein the position is fed as a digital input to the trained data driven model (M1).

3. A computer-implemented method (100) according to claim 1 or 2, wherein the method (100) further comprises steps of
obtaining (200) one or more of the following data of a specific parcel locker
- Mean remaining time; and/or
- Maximum remaining time; and/or
- Minimum remaining time; and/or
- Day wise average user pickups of parcels; and/or
- Week wise average user pickups of parcels; and/or
- Month wise average user pickups of parcels; and/or
- Dwell time of parcels stored within the compartments; and/or
- User IDs of recipients of parcels stored at the parcel locker;
wherein the unique parcel locker data is fed as a digital input to the trained data driven model (M1).

4. A computer-implemented method (100) according to any of claims 1 to 3, wherein the step of predicting (300) and transmitting (400) are performed upon receiving a status update of a parcel locker for providing the distribution server (90) with predicted compartment availability (80) before a booking request (70).

5. A computer-implemented method (100) according to any of claims 1 to 4, wherein the step of predicting (300) and transmitting (400) is performed with a pre-set repetition rate for providing the distribution server (90) with predicted compartment availability (80) before a booking request (70).

6. A computer-implemented method (100) according to any of claims 1 to 5, wherein the predicted compartment availability (80) includes at least two time slots with predicted compartment availability within the two time slots.

7. A computer-implemented method (100) according to any of claims 1 to 6, wherein the parcel locker (10) comprises a first group of compartments (20I) and a second group of compartments (20II), wherein the first group of compartments (20I) are smaller than the second group of compartments (20II),
wherein the step of predicting (300) the compartment availability (80) of the parcel locker (10) is performed for the first group of compartments (20I) and the second group of compartments (20II) and the step of transmitting (400) includes transmitting the predicted compartment availability (80) of the first group of compartments (20I) and the second group (20II) of compartments to the distribution server (90).

8. A method (1000) of reserving, at a distribution server (90), a compartment (14) of a parcel locker (10) to a carrier service (92), wherein the method (200) comprises steps of
- receiving (1100) from a carrier service (92) a booking request (70) of a compartment (14) of a parcel locker (10);
- receiving (1100) a predicted compartment availability (80) of the parcel locker (10);
- reserving (1200) the compartment (14) based on the predicted compartment availability (80);
- transmitting (1300) a booking confirmation (72) to the carrier service (92).

9. A method (200) according to claim 8, wherein the predicted compartment availability (80) is obtained by performing the steps of the method (100) according to any of claim 1 to 7.

10. A method (200) according to claim 9, wherein a computer unit external to the distribution server (90) perform the steps of the method (100) according to any of claim 1 to 7.

11. A method (200) according to any of claims 8 to 10, wherein the step of receiving (1100) the predicted compartment availability (80) of the parcel locker (10) is performed before receiving (1100) the booking request (70) from the carrier service (10).

12. A method (200) according to any of claims 8 to 11, wherein the method (200) comprises steps of
- receiving (1100) from the parcel locker (10) information about a change of the compartment occupation status; and
- updating (1400) the predicted compartment availability by repeating the steps of the method (100) according to any of claim 1 to 7, wherein the changed compartment occupation status is fed as a digital input to the first data driven model (M1).

13. A method (200) according to any of claims 8 to 12, wherein the parcel locker (10) comprises a first group of compartments (20I) and a second group of compartments (20II), wherein the first group of compartments (20I) are smaller than the second group of compartments (20II),
wherein the booking request (70) is of a compartment (14) of the first group of compartments (20I); and wherein the step of receiving (1100) includes the predicted compartment availability (80) of the first group of compartments (20II) and the second group of compartments (20II);
the step of reserving (1200) the compartment (14) of the first group of compartments (20I) based on the predicted compartment availability (80);
wherein the booking confirmation (72) includes permission to store a parcel in the second group of compartments (20II) in the case of non-availability of the first group of compartments (201).

14. A computer program comprising instructions which, when the program is executed by a computer, causes the computer to carry out the steps of the method (100) of any of claims 1-7 and/or the steps of the method (200) of any of claims 8-13.

15. A computer readable storage medium having stored thereon the computer program of claim 14.
